# EUROPÄISCHE PATENTSCHRIFT

(11) **EP 3 144 494 B1**
(45) Veröffentlichungstag und Bekanntmachung des Hinweises auf die Patenterteilung: **07.11.2018**
(21) Anmeldenummer: 15186105.1
(22) Anmeldetag: 21.09.2015
(51) Int. Cl.: F01C 1/12, F01C 11/00, F01C 21/00, F02B 41/10, F02G 5/04, F01N 5/02, F01N 5/04, F01N 5/00

(54) **ABGASENERGIERÜCKGEWINNUNGSSYSTEM UND VERFAHREN ZUR ABGASENERGIERÜCKGEWINNUNG**
EXHAUST GAS ENERGY RECOVERY SYSTEM AND METHOD FOR EXHAUST GAS ENERGY RECOVERY
SYSTEME DE RECUPERATION D'ENERGIE DES GAZ D'ECHAPPEMENT ET PROCEDE DE RECUPERATION D'ENERGIE DES GAZ D'ECHAPPEMENT

(43) Veröffentlichungstag der Anmeldung: 22.03.2017
(73) Patentinhaber: Fuelsave GmbH, 69190 Walldorf (DE)
(72) Erfinder: HOFFMANN, Dirk, 21244 Buchholz i.d. N. (DE)
(74) Vertreter: Ridderbusch, Oliver

(56) Entgegenhaltungen:
- WO-A1-2008/092218
- GB-A- 2 513 432
- US-A1- 2012 124 992

## Beschreibung

Die vorliegende Erfindung betrifft ein Abgasenergierückgewinnungssystem nach dem Oberbegriff des Anspruchs 1 sowie ein Verfahren zur Abgasenergierückgewinnung gemäß dem Oberbegriff des Anspruchs 10.

Damit Verbrennungsmotoren, insbesondere in Fahrzeugen, möglichst effizient arbeiten, wird einerseits allgemein an Verbesserungen der Gestaltung des Verbrennungsprozesses selbst gearbeitet. Andererseits kann der Gesamtwirkungsgrad auch erhöht werden, indem die Energie von Abgasen, die durch den Verbrennungsprozess entstehen, weiter genutzt werden.

Hierzu umfasst ein gattungsgemäßes Abgasenergierückgewinnungssystem ein Abgasleitungssystem zum Leiten von Abgasen eines Verbrennungsmotors sowie eine Motor-Generatoreinrichtung, welche über Abgasenergie zum Erzeugen von elektrischem Strom antreibbar ist.

In entsprechender Weise ist bei einem gattungsgemäßen Verfahren zur Abgasenergierückgewinnung vorgesehen, dass elektrischer Strom mit einer Motor-Generatoreinrichtung durch Abgasenergie erzeugt wird.

Bekannte Abgasenergierückgewinnungssystem nutzen Wärmeenergie des Abgases, um daraus elektrische Energie zu erzeugen. Hierzu wird die Wärme des Abgases auf ein davon verschiedenes Arbeitsfluid übertragen. Das Arbeitsfluid befindet sich in der Regel in einem geschlossenen Kreislauf und durchläuft den Motor. Ein Leitungssystem des Arbeitsfluids umfasst weitere Komponenten, etwa eine Pumpe, einen Kondensator, gegebenenfalls weitere Erhitzer und einen Rekuperator. Die Auswahl dieser Komponenten hängt von dem durchgeführten Kreisprozess ab. Insbesondere werden Rankine-Kreisprozesse verwendet, welche auch als ORC oder Organic Rankine Cycle bezeichnet werden.

Bekannte Abgasenergierückgewinnungssysteme können zwar einen beträchtlichen Anteil der Energie des Abgases nutzbar machen. Das anschließend ausgegebene Abgas hat aber weiterhin viel Energie, die ungenutzt bleibt.

GB 2513432 A beschreibt ein Abgasenergierückgewinnungssystem, bei dem Abgase nach einem Turbolader steuerbar zu einer Turbine oder einen Bypass, welcher die Turbine umgeht, geleitet werden. Die Turbine ist mit einem Generator gekoppelt, um aus Energie des Abgases elektrischen Strom zu gewinnen. WO 2008/092218 A1 beschreibt einen Verbrennungsmotor, bei dem das Abgas eine Rotationsmaschine antreibt. Die Rotationsmaschine soll zusätzliches Drehmoment bereitstellen und die Kurbelwelle des Verbrennungsmotors antreiben. US 2012/0124992 A1 beschreibt ein System mit einem Verbrennungsmotor, wobei zusätzlich eine Turbine und ein damit verbundener Generator 66 vorhanden sind. Die Turbine wird durch Frischluft, die über einen Wärmetauscher mit Abgaswärme erhitzt wird, angetrieben.

Als eine **Aufgabe** der Erfindung kann erachtet werden, ein Abgasenergierückgewinnungssystem sowie ein Verfahren zur Abgasenergierückgewinnung anzugeben, welche möglichst effizient Abgasenergie nutzen.

Diese Aufgabe wird durch das Abgasenergierückgewinnungssystem mit den Merkmalen des Anspruchs 1 und durch das das Verfahren mit den Merkmalen des Anspruchs 10 gelöst.

Vorteilhafte Varianten des erfindungsgemäßen Abgasenergierückgewinnungssystems und des erfindungsgemäßen Verfahrens sind Gegenstand der abhängigen Ansprüche und werden außerdem in der folgenden Beschreibung erläutert.

Bei dem Abgasenergierückgewinnungssystem der oben genannten Art ist erfindungsgemäß vorgesehen, dass das Abgasleitungssystem eine Leitung (nachstehend auch als erster Leitungsarm bezeichnet) zur Motor-Generatoreinrichtung umfasst zum Leiten von Abgasen in die Motor-Generatoreinrichtung, und dass die Motor-Generatoreinrichtung einen Motor umfasst, welcher so angeordnet ist, dass er durch einen Druck von durch ihn strömendem Abgas antreibbar ist.

In entsprechender Weise ist bei dem Verfahren der vorgenannten Art erfindungsgemäß vorgesehen, dass über eine Leitung eines Abgasleitungssystems Abgase in die Motor-Generatoreinrichtung geleitet werden. Diese umfasst einen Motor, welcher durch einen Druck von durch ihn strömendem Abgas angetrieben wird.

Als eine wesentliche Idee der Erfindung wird der Druck des Abgases zur Erzeugung von elektrischem Strom verwendet. Während bislang allein die Wärme des Abgases zur Stromerzeugung genutzt worden ist, kann durch die Erfindung zusätzlich oder alternativ der Abgasdruck genutzt werden. Somit wird kinetische Energie des Abgases, welche bisher ungenutzt blieb, zumindest teilweise in elektrische Energie umgewandelt.

Als ein weiterer Kerngedanke werden Abgase direkt durch den Motor der Motor-Generatoreinrichtung geleitet. Dies ist relevant, um einen möglichst großen Anteil der im Druck vorliegenden Energie zu nutzen. Vorteilhafte Gestaltungen des Motors, um auch bei eher geringem Druck einen möglichst hohen Wirkungsgrad zu ermöglichen, werden im Späteren näher beschrieben.

Unter der Motor-Generatoreinrichtung kann allgemein eine Einrichtung verstanden werden, welche einen Motor umfasst und dazu eingerichtet ist, Bewegungsenergie in elektrische Energie umzuwandeln. Die hierfür erforderlichen Komponenten können lokal eine Einheit bilden oder auch örtlich voneinander getrennt vorliegen und wirkungsmäßig miteinander verbunden sein. Insbesondere kann ein Generator vorhanden sein, worunter allgemein Mittel verstanden werden können, mit denen die vom Motor bereitgestellte (Rotations-)Bewegung in elektrische Energie umgewandelt werden kann.

Als zu dem Abgasenergierückgewinnungssystem der Erfindung gehörig können auch ein Verbrennungsmotor und ein Abgasbehandlungssystem zum Reinigen von Abgasen angesehen werden. Das Abgasleitungssystem kann nun eingerichtet sein zum Leiten von zumindest einem Teil der Abgase des Verbrennungsmotors zunächst durch den Motor der Motor-Generatoreinrichtung und sodann zum Abgasbehandlungssystem. Indem die Motor-Generatoreinrichtung in Strömungsrichtung vor dem Abgasbehandlungssystem angeordnet ist, kann die im Druck vorliegende Energie genutzt werden, bevor der Druck durch das Abgasbehandlungssystem abfällt. Ist ein Turbolader vorhanden, so befindet sich die Motor-Generatoreinrichtung vorzugsweise in Strömungsrichtung hinter dem Turbolader. Dadurch wird insbesondere ein Nachrüsten herkömmlicher Systeme erleichtert, da die miteinander wechselwirkenden Komponenten bis zum Turbolader unverändert bleiben können.

Das Abgasleitungssystem kann eine Abzweigung umfassen, von welcher ein erster Leitungsarm über den Motor in Richtung des Abgasbehandlungssystems läuft und ein zweiter Leitungsarm den Motor umgeht und in Richtung des Abgasbehandlungssystems läuft. Steuerungsmittel können an der Abzweigung vorhanden und dazu eingerichtet sein, einzustellen, zu welchen Anteilen Abgas auf den ersten und zweiten Leitungsarm aufgeteilt wird. Vorteilhafterweise kann durch diese Steuerung insbesondere ein gewünschter Minimaldruck des Abgases hinter dem Motor eingestellt werden. Auch kann eine Maximalmenge an Abgasen zum Motor eingestellt werden, um Schranken von dessen geeigneten Betriebsbedingungen einzuhalten. Weiterhin wird über die genannte Steuerung eingestellt, wie viel elektrische Energie erzeugt wird. Beispielsweise kann es vorgesehen sein, die Menge an Abgasen zum Motor zu reduzieren, wenn weniger elektrische Energie benötigt wird und/oder wenn ein Speicher für elektrische Energie vollständig geladen ist.

Die Steuerungsmittel umfassen vorzugsweise eine drehbare Klappe. Deren Drehstellung gibt vor, zu welchen Anteilen Abgas in eine Eintrittsöffnung des ersten Leitungsarms und in eine Eintrittsöffnung des zweiten Leitungsarms geleitet wird. In dieser Weise kann eine Steuerung mit einfachen Mitteln zuverlässig erfolgen.

Prinzipiell kann der Motor der Motor-Generatoreinrichtung beliebiger Art sein. Hierbei ist aber zu berücksichtigen, dass zahlreiche Motoren nur bei verhältnismäßig hohem Druck einen hinreichenden Wirkungsgrad zeigen. Zudem stellen viele Motoren enge Kriterien an ein durchströmendes Medium, beispielsweise hinsichtlich dessen Temperatur oder Viskosität. Für einen möglichst hohen Wirkungsgrad sollte das durch den Motor geleitete Medium das Abgas selbst sein. Nachstehend werden bevorzugte Merkmale des Motors beschrieben, um den Abgasdruck möglichst effizient nutzen zu können.

Der Motor ist bevorzugt ein Drehkolbenmotor, bei welchem mindestens ein Drehkolben von durchströmendem Abgas drehbar ist und so eine Welle antreibt, über die wiederum der Generator angetrieben wird.

Der Drehkolbenmotor umfasst ein Gehäuse, welches einen Innenraum bildet. In dem Innenraum sind mindestens oder genau zwei Drehkolben angeordnet. Zudem ist eine Eintrittsöffnung zum Einleiten von Abgasen in den Innenraum vorgesehen. Die Eintrittsöffnung ist mit dem Abgasleitungssystem, insbesondere mit dem ersten Leitungsarm, verbunden. Der Drehkolbenmotor umfasst weiterhin eine Austrittsöffnung für Abgase, welche sich am Innenraum an einer der Eintrittsöffnung gegenüberliegenden Seite befindet. Abgase durchströmen somit den Innenraum und versetzen dabei den oder die Drehkolben in Rotation.

Jeder Drehkolben weist bevorzugt an seinem Außenumfang mindestens zwei Dichtleisten und mindestens zwei Vertiefungen auf. Die Formen der Vertiefungen und der Dichtleisten sind gewählt zum, insbesondere dichtenden, Eingreifen der Dichtleisten von jeweils einem der Drehkolben in die Vertiefungen des jeweils anderen Drehkolbens. Zudem sind die Dichtleisten in Radialrichtung zum dichtenden Kontaktieren einer Gehäuseinnenwand bemessen. Die Radialrichtung bezieht sich dabei auf den Radius des zugehörigen Drehkolbens, womit die Radialrichtung quer oder senkrecht zur Rotationsrichtung des jeweiligen Drehkolbens steht. Das von der Eintrittsöffnung kommende Abgas drückt gegen (zumindest) einige der Dichtleisten, wodurch diese Dichtleisten gegen die Gehäuseinnenwand gedrückt werden. Insbesondere kann je nach Drehstellung mindestens eine (oder genau eine) der Dichtleisten von jedem Drehkolben dem einströmenden Abgas ausgesetzt sein und somit durch dieses gegen die Gehäuseinnenwand gedrückt werden.

Als wesentliche Eigenschaft wird demnach eine Dichtung eines Drehkolbenmotors über Dichtleisten bewirkt, welche an die Drehkolben ein- oder angesetzt werden. Ein Abgasdruck kann auf die Dichtleisten wirken und diese gegen die Gehäuseinnenwand drücken, womit eine besonders gute Dichtung erzeugt wird. Somit führt der Abgasdruck zu einer gewissen Verformung der Dichtleisten, welche für eine effiziente Dichtung bedeutsam ist.

Eine solche Verformung wäre nicht oder kaum möglich, wenn der gesamte Außenumfang eines Drehkolbens starr, insbesondere aus demselben Material, gebildet wäre.

Der dichtende Abgasdruck kann bereits bei einem verhältnismäßig geringen Druck erreicht werden. Auch spielt die Viskosität des Abgases nur eine geringe Rolle. Daher kann der Drehkolbenmotor für unterschiedliche Abgaszusammensetzungen und unter sehr unterschiedlichen Drücken eingesetzt werden. Als weiterer Vorteil können Schmiermittel oder-öle bei dem Drehkolbenmotor nicht erforderlich sein.

Eine besonders gute Dichtung kann erreicht werden, indem die Dichtleisten ein verformbares oder elastisches Material umfassen, so dass sie durch das Abgas dichtend gegen die Gehäuseinnenwand drückbar / verformbar sind. Das Material der Dichtleisten ist leichter verformbar oder elastischer als ein die Dichtleisten umgebendes Material des Drehkolbens, insbesondere als das Material, aus dem die später näher beschriebenen Nuten zum Aufnehmen der Dichtleisten gebildet sind.

Die Drehkolben sind so dimensioniert und im Innenraum angeordnet, dass das Abgas von der Eintrittsöffnung zur Austrittsöffnung nur gelangen kann, wenn dabei die Drehkolben rotiert werden. Mit anderen Worten bewirken die beiden Drehkolben bei Stillstand eine Dichtung, so dass ohne Rotation kein Abgas den Innenraum durchströmen kann. Für diese Dichtung ist einerseits ein Kontakt der beiden Drehkolben nötig. Durch diesen Kontakt kann wenig oder kein Abgas zwischen den beiden Drehkolben hindurch gelangen. Andererseits wird für die Dichtung auch ein Kontakt der beiden Drehkolben zu der Gehäuseinnenwand benötigt. Dieser Kontakt besteht zumindest an einer nach außen gewandten Seite des jeweiligen Drehkolbens, welche dem Kontaktbereich zwischen den Drehkolben abgewandt ist. Beispielsweise kann jeder Drehkolben mittels seiner Dichtleisten einen dichtenden Kontakt zur benachbarten Gehäuseinnenwand über einen Winkelbereich von mindestens 150°, bevorzugt mindestens 180° und besonders bevorzugt mehr als 180° bereitstellen.

Die Dichtleisten können sich in eine Longitudinalrichtung erstrecken, welche im Wesentlichen parallel zu den Rotationsachsen der beiden Drehkolben steht. Insbesondere kann ein Winkel zwischen der Longitudinalrichtung und den Rotationsachsen kleiner als 20°, vorzugsweise kleiner als 10°, sein.

Die beiden Rotationsachsen der zwei Drehkolben können ebenfalls parallel zueinander stehen oder zumindest in einem Winkel, der höchstens 40° oder vorzugsweise höchstens 20° beträgt. Zudem können die beiden Drehkolben identisch gebildet sein. Werden asymmetrische Dichtleisten verwendet, wie später beschrieben, so können die Drehkolben bis auf eine gespiegelte Anordnung oder Formung der Dichtleisten identisch sein.

Unter einem Drehkolben kann ein Gegenstand verstanden werden, welcher drehbar gelagert ist und bei Drehung eine Welle mitdreht. Die Drehung dieser Welle kann sodann verwendet werden, um beispielsweise andere Objekte in Rotation zu versetzten und/oder über den Generator der Motor-Generatoreinrichtung elektrische Energie zu erzeugen.

Zur Befestigung der Dichtleisten an den Drehkolben können die Dichtleisten in Nuten, also Rillen oder ähnlichen Vertiefungen, aufgenommen sein, welche am jeweiligen Außenumfang der Drehkolben geformt sind. Insbesondere können die Nuten in später näher beschriebenen Zahnkränzen der Drehkolben gebildet sein. In den Nuten können die Dichtleisten in prinzipiell beliebiger Weise befestigt sein. Die Dichtleisten können somit austauschbar sein, womit bei einem Abrieb aufgrund des dichtenden Kontakts ein leichter Wechsel der Dichtleisten möglich ist, ohne dass weitere Komponenten des Drehkolbenmotors ausgetauscht werden müssten.

Bei einer bevorzugten Gestaltung sind die Dichtleisten als Nutensteine gebildet zum haltenden Eingreifen in die Nuten in den Drehkolben. Darunter ist zu verstehen, dass die Dichtleisten an ihrem jeweiligen inneren Ende, welches in den zugehörigen Drehkolben aufgenommen ist, eine Verdickung oder einen Kragen aufweisen. Die Nuten, in welchen die Dichtleisten aufgenommen sind, sind so geformt, dass die genannte Verdickung oder der Kragen haltend eingreift.

Insbesondere können die Nuten als T-Nuten geformt sein und jeder der Nutensteine kann einen seitlich hervorstehenden Kragen zum Eingreifen in eine der T-Nuten umfassen. Die Nuten haben demnach in einem Schnitt quer oder senkrecht zur Rotationsachse des zugehörigen Drehkolbens eine T-Form. Ein dem Inneren des Drehkolbens zugewandtes Ende der Nuteinsteine hat dabei ebenfalls eine T-Form, so dass der Nutenstein in der T-Nut gehalten wird. Grundsätzlich können alternativ oder ergänzend auch Schraubbefestigungen oder Klebeverbindungen zum Befestigen der Dichtleisten in den Nuten vorgesehen werden.

Allgemeiner aber insbesondere bei den vorgenannten Beispielen können die Dichtleisten und die zughörigen Nuten so geformt sein, dass die Dichtleisten in radialer Richtung des zugehörigen Drehkolbens gehalten werden, also unbeweglich sind. Hingegen kann etwa senkrecht hierzu, insbesondere in Richtung der Rotationsachse des Drehkolbens, ein Bewegen (und damit ein Einsetzen und Entnehmen) der Dichtleisten möglich sein. Somit können abgenutzte oder abgeriebene Dichtleisten leicht ausgetauscht werden. Die dichtende Wirkung der Dichtleisten zu der Gehäuseinnenwand hängt von der Verformung der Dichtleisten ab. Dabei ist es vorteilhaft, wenn der Abgasdruck eine Verformung der Dichtleisten zur Gehäuseinnenwand hin bewirkt, und nicht etwa eine Verformung weg von der Gehäuseinnenwand. Jeder der Dichtleisten hat eine Seite, welche bei einer Drehwinkelstellung des zugehörigen Drehkolbens, bei welcher die Dichtleiste die Gehäuseinnenwand kontaktiert, einströmendem Abgas zugewandt ist. Diese Seite wird nachstehend als Abgaskontaktseite oder Anströmungsseite für Abgase bezeichnet. Um eine Verformung zum dichtenden Kontaktieren der Gehäuseinnenwand herzustellen, hat die Abgaskontaktseite vorzugsweise keine konvexe Form oder zumindest an ihrem der Gehäuseinnenwand zugewandten Ende keine konvexe Form. Bevorzugt kann die Abgaskontaktseite vielmehr eine konkave Form haben oder zumindest an ihrem der Gehäuseinnenwand zugewandten Ende eine konkave Form haben. Alternativ kann ein im Wesentlichen ebener Verlauf der Abgaskontaktseite für eine je nach Umständen ebenfalls ausreichende Verformung sorgen.

Jede der Dichtleisten hat zudem eine Rückseite, welche der Abgaskontaktseite gegenüberliegt. Diese Rückseite ist nicht einströmendem Abgas zugewandt, wenn eine Drehwinkelstellung des zugehörigen Drehkolbens vorliegt, bei welcher die Dichtleiste die Gehäuseinnenwand kontaktiert beziehungsweise zu dieser benachbart ist. Die Form der Rückseite hat ebenfalls Auswirkungen auf die Verformung und damit die dichtende Wirkung. Die Rückseite ist vorzugsweise nicht konkav oder zumindest an einem der Gehäuseinnenwand zugewandten Ende nicht konkav. Bevorzugt ist die Rückseite konvex geformt oder zumindest an einem der Gehäuseinnenwand zugewandten Ende konvex geformt. Eine hinreichende Dichtungswirkung kann wiederum auch bei einer linearen oder ebenen Form der Rückseite möglich sein.

Die Dichtleisten können eine Kante aufweisen, an welcher ein dichtender Kontakt zur Gehäuseinnenwand bewirkt wird. Eine Kante kann sich aus einem nicht runden Querschnitt ergeben, insbesondere wenn die Abgaskontaktseite konkav und die Rückseite konvex ist.

Vorzugsweise verfügt jeder Drehkolben über (insbesondere genau) zwei Dichtleisten an gegenüberliegenden Winkelpositionen an seinem Außenumfang. Insbesondere können die beiden Winkelpositionen um einen Drehwinkel von 180° um die Rotationsachse des zugehörigen Drehkolbens zueinander versetzt sein. Zudem kann jeder Drehkolben zwei Vertiefungen umfassen, welche sich am Außenumfang an Winkelpositionen befinden, die ebenfalls um 180° zueinander versetzt und vorzugsweise jeweils um 90° zu den Winkelpositionen der beiden Dichtleisten versetzt sind. Dadurch wird erreicht, dass einströmendes Abgas stets gegen eine der Dichtleisten an jedem Drehkolben drückt und dadurch eine Rotation des Drehkolbens bewirkt. Zudem wird durch diese Anordnung erreicht, dass unabhängig von einer momentanen Drehstellung der Drehkolben stets eine Dichtung beider Drehkolben zur Gehäuseinnenwand bereitgestellt wird.

Die Dichtleisten sind so bemessen und eine Gehäuseinnenwand so geformt, dass die Dichtleisten innerhalb eines Drehwinkelbereichs der Drehkolben die Gehäuseinnenwand dichtend kontaktieren. Dieser Drehwinkelbereich kann sich gegenüberliegend zu einem Kontaktbereich zwischen den beiden Drehkolben befinden. Je nach Drehwinkel des Drehkolbens kontaktiert also zumindest eine der Dichtleisten die Gehäuseinnenwand dichtend. Vorzugsweise ist die Formung der Gehäuseinnenwand derart, dass über einen Drehwinkelbereich, der beispielsweise zwischen 5° und 20° betragen kann, zwei Dichtleisten die Gehäuseinnenwand kontaktieren und ansonsten bloß eine Dichtleiste die Gehäuseinnenwand kontaktiert. Durch einen solchen Überlapp wird für jede Drehstellung sichergestellt, dass kein Abgas an den Drehkolben vorbei strömen kann, ohne diese in Drehung zu versetzen.

Jeder der Drehkolben kann an seinem Außenumfang einen Zahnkranz aufweisen. Die Drehkolben können sodann so angeordnet sein, dass ihre Zahnkränze ineinandergreifen. Hierdurch wird weitgehend verhindert, dass Abgas zwischen den beiden Drehkolben hindurchströmt. Vielmehr wird das Abgas am Rand zwischen den Drehkolben und der Gehäuseinnenwand befördert.

Die Zahnkränze können durch die Vertiefungen und Dichtleisten unterbrochen sein und im Übrigen über den gesamten Umfang der beiden Drehkolben verlaufen. Unter einem Zahnkranz kann verstanden werden, dass eine Außenumfangsfläche des zugehörigen Drehkolbens radial hervorstehende Zähne aufweist. Vorzugsweise erstreckt sich jeder Zahn über die gesamte Höhe der Drehkolben entlang deren Rotationsachsen.

Insbesondere durch Temperaturschwankungen kann sich die Relativposition der beiden Drehkolben zueinander geringfügig ändern. Durch das Ineinandergreifen der Zahnkränze kann aber auch bei solchen Positionsschwankungen weiterhin eine dichtende Wirkung erreicht werden. Hingegen wären die Zahnkränze ungeeignet, eine Dichtung zur Gehäuseinnenwand bereitzustellen. Denn hier würden Positionsschwankungen mangels ineinandergreifender Zähne zu Leckströmen führen. Um dies zu vermeiden, wird eine Dichtung zur Gehäuseinnenwand vorzugsweise nicht durch die Zahnkränze, sondern durch die Dichtleisten bewirkt.

Je nach Drehstellung der beiden Drehkolben wird ein weitgehend dichtender Kontakt zwischen diesen entweder durch die ineinandergreifenden Zahnkränze bereitgestellt, oder durch eine der Dichtleiste von einem der Drehkolben, welche in eine der Vertiefungen am anderen Drehkolben hineinragt.

Die Dichtleisten können in radialer Richtung von ihrem jeweiligen Drehkolben weiter nach außen ragen als der jeweilige Zahnkranz. Dadurch ist der Zahnkranz stets beabstandet von der Gehäuseinnenwand. Hierzwischen wird ein Freiraum gebildet, über welchen Abgas in Richtung der Austrittsöffnung gelangt. Der Freiraum wird in Umfangsrichtung der Drehkolben durch die Dichtleisten begrenzt.

Die Dichtleisten stehen über den jeweiligen Zahnkranz vorzugsweise um eine Radialstrecke hervor, welche zwischen 5% und 30%, insbesondere zwischen 10% und 25%, eines Radius des Zahnkranzes beträgt. Dieser Radius kann ab dem Mittelpunkt des Drehkolbens bis zum Außenumfang des zugehörigen Zahnkranzes gemessen sein. Die hervorstehende Radialstrecke beeinflusst die Größe einer Verformung der Dichtleistung und beeinflusst somit die Dichtungseigenschaften. Zudem ist die hervorstehende Radialstrecke maßgeblich für die Menge an Abgas, die an dem zugehörigen Drehkolben vorbei befördert wird. Es hat sich gezeigt, dass mit den vorgenannten Werten eine gute Dichtung erreicht werden kann und über eine verhältnismäßig große Spanne an Durchflussmengen ein hoher Wirkungsgrad erreicht werden kann.

Eine radiale Größe von Zähnen der Zahnkränze beträgt vorzugsweise höchstens 15%, vorzugsweise höchstens 10%, eines Radius des Zahnkranzes. Hiermit wird ein Abgasfluss zwischen den beiden Zahnkränzen hindurch genügend weit reduziert. Größere Zähne könnten je nach Abgas zudem nachteilige Wirkungen auf die Abgasströmung haben. Der Radius des Zahnkranzes kann durch die Strecke von dessen Mittelpunkt bis zu seinem äußeren Umfang, also dem äußeren Ende der Zähne, definiert sein.

Das Abgasenergierückgewinnungssystem der Erfindung kann grundsätzlich auch so gestaltet sein, dass außer dem Druck des Abgases auch Wärmeenergie des Abgases genutzt wird, um elektrische Energie zu gewinnen. Zur Nutzung der Wärmeenergie kann es bevorzugt sein, einen weiteren Drehkolbenmotor zu verwenden, der wie hier beschrieben ist, oder auch denselben Drehkolbenmotor, der auch der die Nutzung des Abgasdrucks verwendet wird. Ist ein weiterer Drehkolben vorgesehen, kann dieser in einem Arbeitsfluidkreislauf angeordnet sein, in welchem ein vom Abgas verschiedenes Arbeitsfluid zirkuliert. Dabei ist durch einen Wärmetauscher Wärme vom Abgas auf das Arbeitsfluid übertragbar. Das Arbeitsfluid kann grundsätzlich beliebig sein. Der Arbeitsfluidkreislauf ist als Kreisprozess gestaltet und umfasst Mittel zum Umwandeln von Wärmeenergie des Abgases in Bewegungsenergie. Beispielsweise kann der Arbeitsfluidkreislauf als organischer Rankine-Kreisprozess (ORC, Organic Rankine Cycle) gestaltet sein und die hierfür erforderlichen Komponenten umfassen. Als Motor des Kreisprozesses (oder anstelle der in solchen Kreisprozessen verwendeten Turbine) ist der hier beschriebene Drehkolbenmotor vorgesehen. In diesem wird das durchströmende Arbeitsfluid entspannt und es wird so eine Rotation der Drehkolben bewirkt. Anstelle eines ORC-Prozesses können auch andere Kreisprozesse genutzt werden, bei welchen mit Wärmeenergie ein Motor angetrieben wird. Der Kreisprozess kann beispielsweise eine Speisepumpe, einen Erhitzer beziehungsweise den Wärmetauscher, den Drehkolbenmotor sowie einen Kondensator und fakultativ einen Rekuperator umfassen.

Die Erfindung betrifft weiterhin ein Fahrzeug, beispielsweise einen PKW oder LKW mit Verbrennungsmotor, wobei das Fahrzeug das erfindungsgemäße Abgasenergierückgewinnungssystem aufweist.

Der Drehkolbenmotor wird hier mit zwei Drehkolben beschrieben. Grundsätzlich können aber auch weitere Drehkolben im selben Innenraum oder einem weiteren Innenraum vorhanden sein. Zudem kann die Anzahl an Dichtleisten und zugehörigen Vertiefungen von der zu den verschiedenen Ausführungsformen beschriebenen Anzahl abweichen.

Die als zusätzliche gegenständlichen Merkmale beschriebenen Eigenschaften der Erfindung sind auch als Varianten des erfindungsgemäßen Verfahrens aufzufassen, und umgekehrt.

Weitere Vorteile und Merkmale der Erfindung werden nachstehend mit Bezug auf die beigefügten schematischen Figuren beschrieben. Hierin zeigen:
- Fig. 1: eine schematische Ansicht eines Ausführungsbeispiels eines erfindungsgemäßen Abgasenergierückgewinnungssystems;
- Fig. 2: einen Querschnitt eines Drehkolbenmotors des Abgasenergie-rückgewinnungssystems aus Fig. 1 und
- Fig. 3: einen vergrößerten Ausschnitt aus Fig. 2.

Gleiche und gleich wirkende Bestandteile sind in den Figuren in der Regel mit denselben Bezugszeichen gekennzeichnet.

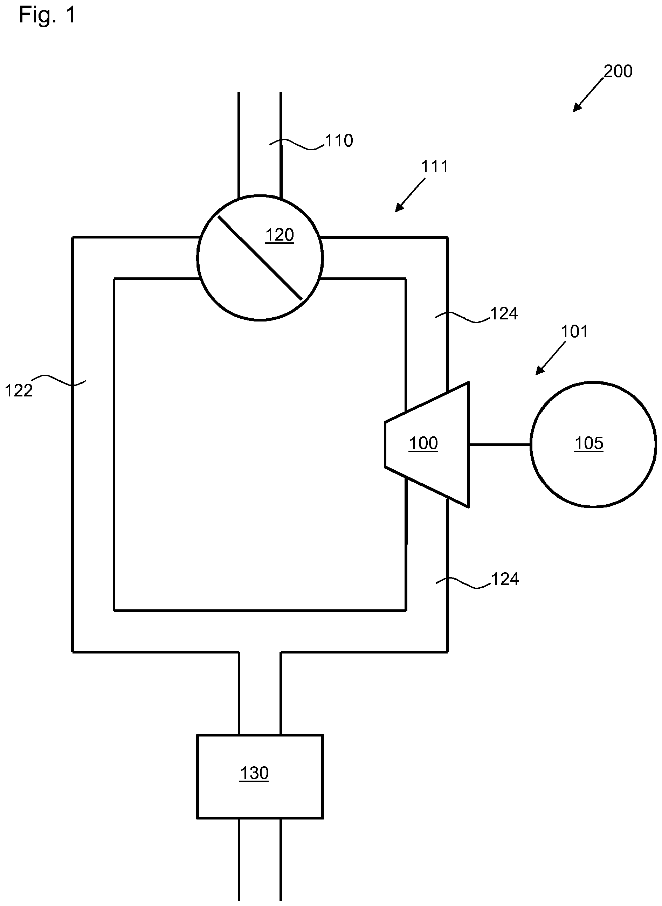

Fig. 1 zeigt eine schematische Ansicht eines Ausführungsbeispiels eines erfindungsgemäßen Abgasenergierückgewinnungssystems 200. Dieses dient der Erzeugung von elektrischer Energie aus der Energie von Abgasen, die von einer hier nicht dargestellten Verbrennungsmaschine ausgegeben werden. Die Verbrennungsmaschine kann insbesondere ein Verbrennungsmotor eines Fahrzeugs sein, worauf die Erfindung aber nicht beschränkt ist.

Das Abgasenergierückgewinnungssystem 200 umfasst als wesentliche Komponenten eine Motor-Generatoreinrichtung 101 und ein Abgasleitungssystem 111. Dieses ist dazu eingerichtet, Abgase durch einen Motor 100 der Motor-Generatoreinrichtung 101 zu leiten und diesen so anzutreiben. Es wird somit der Abgasdruck genutzt, um den Motor 100 anzutreiben. Vorteilhafterweise kann also die im Druck vorliegende Energie des Abgases zur Stromerzeugung genutzt werden.

Das Abgasleitungssystem 111 umfasst zunächst eine Leitung 110, welche Abgase von einem hier nicht abgebildeten Verbrennungsmotor leitet. Zwischen dem Verbrennungsmotor und der dargestellten Leitung können weitere Komponenten angeordnet sein, insbesondere auch ein Turbolader.

Die Leitung 110 führt zu einer Gabelung, an welcher das durch die Leitung 110 strömende Abgas in einen ersten Leitungsarm 124 und/oder einen zweiten Leitungsarm 122 geleitet werden kann. Dies wird über an der Gabelung angeordnete Steuerungsmittel bewirkt, welche beispielhaft durch eine Klappe ausgeführt sind. Die Klappe ist drehbar gelagert, wobei ihre Drehstellung die Anteile des Abgases auf die beiden Leitungsarme 122 und 124 definiert. Während der Leitungsarm 124 Abgas durch den Motor 100 leitet, umgeht der andere Leitungsarm 122 den Motor 100. Sodann werden beide Leitungsarme 122 und 124 zusammengeführt. Das Abgas kann nun in grundsätzlich bekannter Weise weitergeleitet und behandelt werden. Beispielsweise kann es durch ein Abgasbehandlungssystem 130 geleitet werden, welches der Reinigung oder Filterung der Abgase dient.

Die Motor-Generatoreinrichtung 105 umfasst außer dem Motor 100 auch einen Generator 105. Dieser erzeugt elektrische Energie mit Hilfe der durch den Motor 100 bereitgestellten Rotationsenergie. Hierzu kann der Generator 105 insbesondere auf der Welle des Motors 100 angeordnet sein.

Der vom Generator 105 ausgegebene elektrische Strom kann beispielsweise zur Batterie oder zu beliebigen Verbrauchern geleitet werden. Ist das Abgasenergierückgewinnungssystem Teil eines Fahrzeugs, so kann es sich bei den Verbrauchern um beliebige Komponenten des Fahrzeugs handeln. Auch kann ein in Fig. 1 nicht dargestellter Speicher zusätzlich zur Fahrzeugbatterie vorgesehen sein, welcher durch den elektrischen Strom geladen wird. Bei diesem Speicher kann es sich beispielsweise um eine Lithiumionen-Batterie oder einen (Super-)Kondensator handeln.

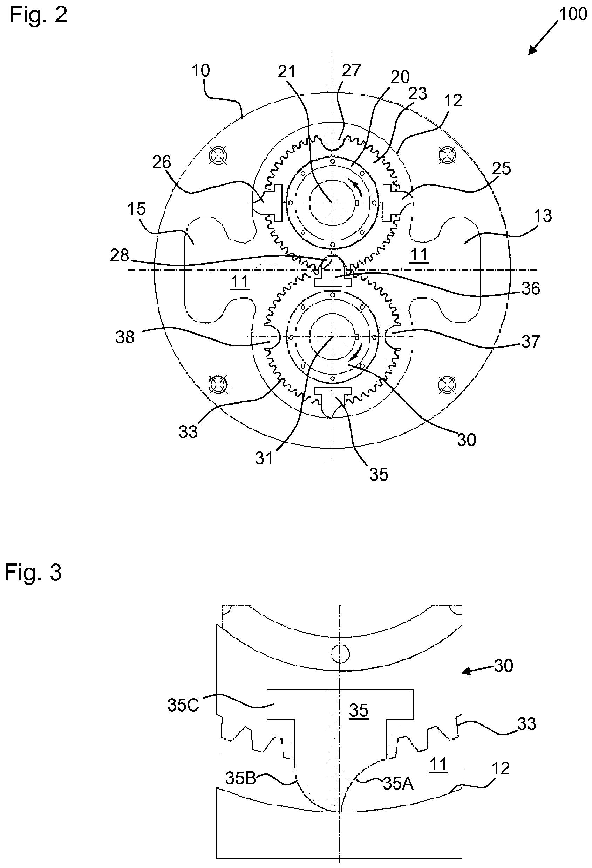

Der Motor 100 muss er für einen Antrieb durch Abgase geeignet sein. Zudem sollte er bei verhältnismäßig niedrigem Druck des antreibenden Abgases dennoch einen möglichst hohen Wirkungsgrad bieten. Dies wird mit einem Motor 100 erreicht, welcher nachstehend mit Bezug auf die Figuren 2 und 3 beschrieben wird.

In Fig. 2 ist schematisch ein Querschnitt eines Motors 100 gezeigt, der als Drehkolbenmotors 100 gebildet ist. Ein vergrößerter Ausschnitt hiervon ist in Fig. 3 dargestellt.

Der Drehkolbenmotor 100 umfasst als wesentliche Komponenten zwei Drehkolben 20 und 30, welche in einem Innenraum 11 angeordnet sind. Dieser wird durch eine Gehäuseinnenwand 12 eines Gehäuses 10 begrenzt.

Eine nicht näher dargestellte Eintrittsöffnung 13 ermöglicht, dass Abgas in den Innenraum 11 einströmt. Die Eintrittsöffnung 13 ist mit dem ersten Leitungsarm aus Fig. 1 verbunden. Am Innenraum 11 ist zudem eine Austrittsöffnung 15 für das Abgas vorhanden. Strömt das Abgas von der Eintrittsöffnung 13 durch den Innenraum 11 zur Austrittsöffnung 15, so muss es hierzu die beiden Drehkolben 20, 30 passieren und versetzt diese dabei in Rotation. Mit den Bezugszeichen 21 und 31 sind die Rotationsachsen der beiden Drehkolben 20 und 30 gekennzeichnet. Die Rotationsachsen 21, 31 erstrecken sich in die Zeichnungsebene hinein.

Für eine effiziente Funktionsweise ist die Gestaltung der Drehkolben 20, 30 entscheidend. Diese sollen eine Dichtung zueinander und eine Dichtung zur umgebenden Gehäuseinnenwand 12 bereitstellen, womit Abgas bei Stillstand der Drehkolben 20, 30 nicht zur Austrittsöffnung 15 gelangen kann.

Gleichzeitig sollen die Drehkolben 20, 30 leicht durch das Abgas antreibbar sein, also bereits bei geringem Druck rotieren.

Zu diesen Zwecken verfügen die beiden Drehkolben 20 und 30 an ihren jeweiligen Außenseiten über Dichtleisten 25, 26, 35, 36. Die Außenseiten können als Mantelflächen von in etwa zylinderförmigen Drehkolben 20, 30 angesehen werden. Die Dichtleisten 25, 26, 35, 36 erstrecken sich vorzugsweise über die gesamte Höhe des Innenraums 11, wobei die Höhe in Richtung der Rotationsachsen 21, 31 verlaufen kann.

Der Drehkolben 20 verfügt über mindestens zwei, vorzugsweise genau zwei, Dichtleisten 25, 26. Ebenso sind am Drehkolben 30 mindestens zwei, vorzugsweise genau zwei, Dichtleisten 35, 36 angeordnet. Die Dichtleisten 25, 26, 35, 36 ragen radial über den übrigen Außenumfang des zugehörigen Drehkolbens 20, 30 hinaus. Die Dichtleisten 25, 26, 35, 36 sind bevorzugt in Nuten am jeweiligen Drehkolben 20, 30 aufgenommen und können vorzugsweise aus einem anderen Material bestehen als der Teil der Drehkolben 20, 30, in dem die Nuten gebildet sind. Insbesondere können die Dichtleisten 25, 26, 35, 36 aus einem verformbaren Material bestehen. Bei diesem kann es sich beispielsweise um Gummi, Harz oder einen Kunststoff handeln. Dadurch können die Dichtleisten 25, 26, 35, 36 durch gegenströmendes Abgas geringfügig verformt und gegen die Gehäuseinnenwand 12 gedrückt werden. Hiermit wird eine besonders gute Dichtung zur Gehäuseinnenwand 12 erreicht. Prinzipiell können die Dichtleisten 25, 26, 35, 36 aber auch aus einem starren Material bestehen, etwa aus Metall. Alternativ oder ergänzend können die Dichtleisten 25, 26, 35, 36 mit etwas Spielraum in ihren zugehörigen Nuten aufgenommen sein, womit der Abgasdruck die Dichtleisten 25, 26, 35, 36 leicht verkippen kann. Dadurch können prinzipiell die Dichtleisten 25, 26, 35, 36 ebenfalls dichtend gegen die Gehäuseinnenwand 12 gedrückt werden.

Die beiden Drehkolben 20, 30 sind so im Innenraum 11 angeordnet, dass sie einander berühren. Dadurch wird eine Abgasströmung zwischen den Drehkolben hindurch weitgehend ausgeschlossen. Die Rotationsachsen 21 und 31 können parallel zueinander stehen. Es ist aber auch eine Neigung zwischen den Rotationsachsen 21, 31 möglich, solange ein weitgehend dichtender Kontakt zwischen den Drehkolben 20, 30 gewährleistet ist.

Hierzu umfassen die Drehkolben 20, 30 an ihrem jeweiligen Außenumfang auch je einen Zahnkranz 23, 33, welcher mit dem übrigen Teil des zugehörigen Drehkolbens 20, 30 starr verbunden ist. Die beiden Zahnkränze 23, 33 sind so bemessen und angeordnet, dass sie ineinandergreifen. Dadurch drehen sich beide Zahnkränze 23, 33 zusammen und bilden kaum Hohlräume zwischen einander. Abgas kann daher zwischen den beiden Zahnkränzen 23, 33 kaum durchtreten.

Außerdem umfassen die Drehkolben 20 und 30 an ihrem jeweiligen Außenumfang Vertiefungen 27, 28 und 37, 38. Die Anzahl der Vertiefungen 27, 28 des ersten Drehkolbens 20 ist gleich der Anzahl an Dichtleisten 35, 36 des zweiten Drehkolbens 30 gewählt. Analog ist die Anzahl der Vertiefungen 37, 38 des zweiten Drehkolbens 30 gleich der Anzahl an Dichtleisten 25, 26 des ersten Drehkolbens 20 gewählt. Zudem sind die Vertiefungen 27, 28, 37, 38 und die Dichtleisten 25, 26, 35, 36 an den beiden Drehkolben 20, 30 so angeordnet, dass bei Rotation der beiden Drehkolben 20 und 30 die Dichtleisten 25, 26 des ersten Drehkolbens 20 gerade auf die Vertiefungen 37, 38 des zweiten Drehkolbens 30 treffen. Ebenso treffen die Dichtleisten 35, 36 des zweiten Drehkolbens 30 gerade auf die Vertiefungen 27, 28 des ersten Drehkolbens 20. Hierzu können beispielsweise am Außenumfang jedes Drehkolbens 20, 30 in jeweils 90°-Abständen eine Vertiefung und eine Dichtleiste abwechseln. In anderen Worten sind die beiden Dichtleisten 25, 26 in einem Azimutwinkel von 180° (das heißt einem 180°-Winkel um die Rotationsachse 21 herum) zueinander beabstandet. Die beiden Vertiefungen 27, 28 sind ebenfalls um einen Azimutwinkel von 180° zueinander versetzt und zusätzlich jeweils um einen Azimutwinkel von 90° zu den Dichtleisten 25, 26 versetzt. Entsprechendes gilt für die Dichtleisten 35, 36 und Vertiefungen 37, 38 des anderen Drehkolbens 30. Grundsätzlich sind auch andere Winkel möglich. Insbesondere wenn mehr als zwei Dichtleisten und zwei Vertiefungen pro Drehkolben 20, 30 vorgesehen werden, ergeben sich auch andere Azimutwinkel. Eine Größe und Form der Vertiefungen ist so gewählt, dass die Dichtleisten in diesen, insbesondere dichtend, aufgenommen werden können.

Wie auch die Zahnkränze 23, 33 bewirken die Dichtleisten 25, 26 35, 36 zusammen mit den Vertiefungen 27, 28, 37, 38, dass das Abgas kaum zwischen den beiden Drehkolben 20, 30 hindurch treten kann.

Unabhängig von einer momentanen Drehstellung soll zudem stets eine der Dichtleisten 25, 26 35, 36 von jedem Drehkolben 20, 30 eine Dichtung zur Gehäuseinnenwand 12 bereitstellen. Hierfür ist ein Drehwinkel relevant, über den dieselbe Dichtleiste 25, 26 35, 36 eine Dichtung zur Gehäuseinnenwand 12 bewirkt. Dieser Drehwinkel kann, wie in Fig. 2 dargestellt, größer als 180° sein und beispielsweise zwischen 185° und 240° betragen. Hierzu hat die Gehäusewand 12 an jedem der Drehkolben eine Kreisabschnittsform, wobei diese Form einen Kreisabschnitt von größer 180° bildet, also mehr als einen Halbkreis bildet.

Die Aufnahme der Dichtleisten 25, 26 35, 36 in ihren zugehörigen Nuten ist näher in Fig. 3 erkennbar. Beispielhaft für alle Dichtleisten 25, 26 35, 36 ist dort die Dichtleiste 35 in ihrem Querschnitt gezeigt. Die Dichtleiste 35 kann profilartig geformt sein, also über ihre Länge (insbesondere in Richtung der Rotationsachse 31) hinweg die gleiche Querschnittsform aufweisen. Wie dargestellt, bildet die Querschnittsform einen Nutenstein. Bei diesem ist zum inneren Ende der Dichtleiste 35 hin ein Kragen 35C gebildet. Dieser greift in eine T-förmige Vertiefung/Nut ein. Dadurch wird verhindert, dass sich der Nutenstein 35 in radialer Richtung aus der Nut des Drehkolbens unbeabsichtigt lösen kann. Ein Einsetzen und Entfernen des Nutensteins 35 ist in Längsrichtung, also in Richtung der Rotationsachse 31, möglich. Durch die Bildung als Nutensteine sind die Dichtleisten einerseits leicht zu befestigen. Andererseits wird auch ein Austauschen vereinfacht. Dies ist bedeutsam, da es aufgrund des dichtenden Kontakts zur Gehäuseinnenwand 12 zu einem allmählichen Abrieb der Dichtleisten 25, 26, 35, 36 kommen kann und so ein Austausch erforderlich werden kann.

Wie in Fig. 2 gezeigt, drückt das Abgas im Innenraum 11 gegen die Drehkolben 20, 30 und diejenigen Dichtleisten 25, 35, die in der momentanen Drehstellung der Drehkolben 20, 30 der Eintrittsöffnung 13 zugewandt sind. Durch diesen Druck drehen sich die Drehkolben 20, 30 in Richtung der in Fig. 2 eingezeichneten Pfeile.

Für die Drehung und insbesondere die dichtende Wirkung der Dichtleisten 25, 35 ist ihre Form wichtig. Dies wird näher mit Bezug auf Fig. 3 beschrieben. Dort ist eine Dichtleiste 35 gezeigt, welche radial vom Zahnkranz 33 hervorsteht. Die Dichtleiste 35 hat einen Punkt maximaler radialer Ausdehnung, beziehungsweise eine Kante, die sich in die Zeichenebene hinein erstreckt (oder in Richtung der Rotationsachse 31 erstreckt). Von dieser Kante aus hat die Dichtleiste 35 eine Fläche 35A, welche dem einströmenden Abgas zugewandt ist (dies gilt für Drehstellungen, in denen die Dichtleiste 35 die Gehäuseinnenwand 12 kontaktiert). Die Fläche 35A wird auch als Abgaskontaktseite / Anströmungsseite 35A bezeichnet. Auf der anderen Seite der genannten Kante hat die Dichtleiste 35 eine weitere Fläche 35B, welche auch als Rückseite 35B bezeichnet wird. Die Rückseite 35B ist nicht dem einströmenden Abgas zugewandt, wenn die Dichtleiste 35 die Gehäuseinnenwand 12 kontaktiert.

Die Abgaskontaktseite 35A weist eine Vertiefung oder eine konkave Form auf, während die Rückseite 35B eine nach außen gewölbte oder konvexe Form hat. Hierdurch wird das äußere Ende der Dichtleiste 35, also der radial am weitesten hervorstehende Teil, durch das gegenströmende Abgas quer oder in etwa senkrecht zur radialen Richtung verformt. Somit wird die Dichtleiste 35 gegen die Gehäuseinnenwand 12 gedrückt. In Fig. 3 wird das untere Ende der Dichtleiste 35 in etwa nach links und somit gegen die Gehäuseinnenwand 12 verformt.

Vorteilhafterweise kann dadurch eine besonders gute Dichtung erzeugt werden, ohne aber eine ungebührend hohe Reibung zwischen den Dichtleisten und der Gehäuseinnenwand zu erzeugen. Bereits bei verhältnismäßig niedrigem Abgasdruck können die Drehkolben daher vorteilhafterweise in Rotation versetzt werden. Somit können auch Abgase mit niedrigem Druck zur Energienutzung herangezogen werden.

Die Dichtleisten können auch andere als die beschriebenen Formen aufweisen. So kann es genügen, wenn entweder die Abgaskontaktseite oder die Rückseite wie beschrieben gebildet ist. Die andere Seite kann beispielsweise eben sein oder wie die übrige Seite geformt sein. Auch ist möglich, dass die Formen der Abgaskontaktseite und der Rückseite allein an einem Endbereich der Dichtleiste wie beschrieben geformt sind und nicht etwa im gesamten Bereich, der radial über den zugehörigen Zahnkranz hervorsteht. Grundsätzlich kann für hinreichende Dichteigenschaften genügen, dass die Dichtleisten und relativ zum Zahnkranz verformbar oder bewegbar sind und insbesondere nicht einstückig mit dem Zahnkranz gebildet sind.

Als ein wesentlicher Gedanke kann der durch eine Verbrennungsmaschine erzeugte Abgasdruck genutzt werden, um elektrische Energie zu erzeugen. Dies erfolgt mit einem Motor, der bevorzugt durch den beschriebenen Drehkolbenmotor gebildet ist.

## Patentansprüche

1. Abgasenergierückgewinnungssystem
- mit einem Abgasleitungssystem (111) zum Leiten von Abgasen eines Verbrennungsmotors,
- mit einer Motor-Generatoreinrichtung (101), welche über Abgasenergie zum Erzeugen von elektrischem Strom antreibbar ist,
- mit einem ersten Leitungsarm (124) zur Motor-Generatoreinrichtung (101) zum Leiten von Abgasen in die Motor-Generatoreinrichtung (101),
- wobei die Motor-Generatoreinrichtung (101) einen Motor (100) umfasst, welcher so angeordnet ist, dass er durch einen Druck von durch ihn strömendem Abgas antreibbar ist,
- **dadurch gekennzeichnet,**
- **dass** der Motor (100) ein Drehkolbenmotor ist
- mit einem Gehäuse (10), welches einen Innenraum (11) bildet,
- mit mindestens zwei Drehkolben (20, 30), welche im Innenraum (11) angeordnet sind,
- mit einer Eintrittsöffnung (13), welche zum Einleiten der Abgase in den Innenraum (11) mit dem Abgasleitungssystem verbunden ist, und
- mit einer Austrittsöffnung (15) für Abgase, welche sich am Innenraum (11) an einer der Eintrittsöffnung (13) gegenüberliegenden Seite befindet,
- **dass** von den zwei Drehkolben (20, 30) jeder an seinem Außenumfang mindestens zwei Dichtleisten (25, 26, 35, 36) und mindestens zwei Vertiefungen (27, 28, 37, 38) aufweist, wobei die Formen der Vertiefungen (27, 28, 37, 38) und der Dichtleisten (25, 26, 35, 36) gewählt sind zum Eingreifen der Dichtleisten (25, 26, 35, 36) von jeweils einem der Drehkolben (20, 30) in die Vertiefungen (27, 28, 37, 38) des jeweils anderen Drehkolbens (20, 30),
- **dass** die Dichtleisten (25, 26, 35, 36) in Radialrichtung zum dichtenden Kontaktieren einer Gehäuseinnenwand (12) bemessen sind,
- **dass** die Dichtleisten (25, 26, 35, 36) ein verformbares Material umfassen, so dass sie durch durchströmende Abgase dichtend gegen die Gehäuseinnenwand (12) drückbar sind,
- **dass** jede der Dichtleisten (25, 26, 35, 36) bei einer Drehwinkelstellung des zugehörigen Drehkolbens (20, 30), bei welcher diese Dichtleiste (25, 26, 35, 36) die Gehäuseinnenwand (12) kontaktiert, eine Anströmungsseite (35A) aufweist, welche einströmendem Abgas zugewandt ist,
- **dass** jede der Dichtleisten (25, 26, 35, 36) eine Rückseite (35B) aufweist, welche der Anströmungsseite (35A) gegenüberliegt und bei einer Drehwinkelstellung des zugehörigen Drehkolbens (20, 30), bei welcher diese Dichtleiste (25, 26, 35, 36) die Gehäuseinnenwand (12) kontaktiert, nicht einströmenden Abgasen zugewandt ist,
- **dass** die Anströmungsseite (35A) eine konkave Form hat und/oder die Rückseite (35B) konvex geformt ist.

2. Abgasenergierückgewinnungssystem nach Anspruch 1,
**dadurch gekennzeichnet,**
**dass** ein Verbrennungsmotor und ein Abgasbehandlungssystem (130) zum Reinigen von Abgasen vorgesehen sind,
**dass** das Abgasleitungssystem (111) eingerichtet ist zum Leiten von zumindest einem Teil der Abgase des Verbrennungsmotors zunächst durch den Motor (100) der Motor-Generatoreinrichtung (101) und sodann zum Abgasbehandlungssystem (130).

3. Abgasenergierückgewinnungssystem nach Anspruch 1 oder 2,
**dadurch gekennzeichnet,**
**dass** das Abgasleitungssystem (111) eine Abzweigung umfasst, von welcher der erste Leitungsarm (124) über den Motor (100) in Richtung des Abgasbehandlungssystems (130) läuft und ein zweiter Leitungsarm (122) den Motor (100) umgeht und in Richtung des Abgasbehandlungssystems (130) läuft, und
**dass** Steuerungsmittel (120) an der Abzweigung vorhanden und dazu eingerichtet sind, einzustellen, zu welchen Anteilen Abgas auf den ersten und zweiten Leitungsarm (122, 124) aufgeteilt wird.

4. Abgasenergierückgewinnungssystem nach einem der Ansprüche 1 bis 3, **dadurch gekennzeichnet,**
**dass** die Steuerungsmittel (120) eine drehbare Klappe (120) umfassen, deren Drehstellung vorgibt, zu welchen Anteilen Abgas in den ersten Leitungsarm und in den zweiten Leitungsarm geleitet wird.

5. Abgasenergierückgewinnungssystem nach einem der Ansprüche 1 bis 4, **dadurch gekennzeichnet,**
**dass** die Drehkolben (20, 30) an ihrem jeweiligen Außenumfang Nuten zum Aufnehmen und Halten der Dichtleisten (25, 26, 35, 36) aufweisen und
**dass** die Dichtleisten (25, 26, 35, 36) als Nutensteine gebildet sind zum haltenden Eingreifen in die Nuten des jeweiligen Drehkolbens (20, 30).

6. Abgasenergierückgewinnungssystem nach Anspruch 5,
**dadurch gekennzeichnet,**
**dass** die Nuten als T-Nuten geformt sind und jeder der Nutensteine einen seitlich hervorstehenden Kragen (35C) zum Eingreifen in eine der T-Nuten umfasst.

7. Abgasenergierückgewinnungssystem nach einem der Ansprüche 1 bis 6, **dadurch gekennzeichnet,**
**dass** jeder Drehkolben (20, 30) genau zwei Dichtleisten (25, 26, 35, 36) an gegenüberliegenden Winkelpositionen an seinem Außenumfang umfasst und dass jeder Drehkolben (20, 30) genau zwei Vertiefungen (27, 28, 37, 38) umfasst, welche sich am Außenumfang an Winkelpositionen befinden, die jeweils um 90° zu den Winkelpositionen der beiden Dichtleisten (25, 26, 35, 36) versetzt sind.

8. Abgasenergierückgewinnungssystem nach einem der Ansprüche 1 bis 7, **dadurch gekennzeichnet,**
**dass** jeder der Drehkolben (20, 30) an seinem Außenumfang einen Zahnkranz (23, 33) aufweist und
**dass** die Drehkolben (20, 30) so angeordnet sind, dass ihre Zahnkränze (23, 33) ineinandergreifen.

9. Abgasenergierückgewinnungssystem nach einem der Ansprüche 1 bis 8, **dadurch gekennzeichnet,**
**dass** die Dichtleisten (25, 26, 35, 36) in radialer Richtung von ihrem jeweiligen Drehkolben (20, 30) weiter nach außen ragen als der jeweilige Zahnkranz (23, 33).

10. Verfahren zur Abgasenergierückgewinnung,
bei dem mit einer Motor-Generatoreinrichtung (101) durch Abgasenergie elektrischer Strom erzeugt wird,
- dass über einen ersten Leitungsarm (124) eines Abgasleitungssystems (111) Abgase in die Motor-Generatoreinrichtung (101) geleitet werden,
- dass die Motor-Generatoreinrichtung (101) einen Motor (100) umfasst, welcher durch einen Druck von durch ihn strömendem Abgas angetrieben wird,
- **dadurch gekennzeichnet,**
- **dass** der Motor (100) ein Drehkolbenmotor ist
- mit einem Gehäuse (10), welches einen Innenraum (11) bildet,
- mit mindestens zwei Drehkolben (20, 30), welche im Innenraum (11) angeordnet sind,
- wobei Abgas durch eine Eintrittsöffnung (13) des Gehäuses (10) vom Abgasleitungssystem in den Innenraum (11) eingeleitet wird,
- wobei Abgas durch eine Austrittsöffnung (15), welche sich am Innenraum (11) des Gehäuses (10) an einer der Eintrittsöffnung (13) gegenüberliegenden Seite befindet, ausgeleitet wird,
- **dass** von den zwei Drehkolben (20, 30) jeder an seinem Außenumfang mindestens zwei Dichtleisten (25, 26, 35, 36) und mindestens zwei Vertiefungen (27, 28, 37, 38) aufweist, wobei die Formen der Vertiefungen (27, 28, 37, 38) und der Dichtleisten (25, 26, 35, 36) gewählt sind zum Eingreifen der Dichtleisten (25, 26, 35, 36) von jeweils einem der Drehkolben (20, 30) in die Vertiefungen (27, 28, 37, 38) des jeweils anderen Drehkolbens (20, 30),
- **dass** die Dichtleisten (25, 26, 35, 36) in Radialrichtung eine Gehäuseinnenwand (12) dichtend kontaktieren,
- **dass** die Dichtleisten (25, 26, 35, 36) ein verformbares Material umfassen, so dass sie durch durchströmende Abgase dichtend gegen die Gehäuseinnenwand (12) gedrückt werden,
- **dass** jede der Dichtleisten (25, 26, 35, 36) bei einer Drehwinkelstellung des zugehörigen Drehkolbens (20, 30), bei welcher diese Dichtleiste (25, 26, 35, 36) die Gehäuseinnenwand (12) kontaktiert, eine Anströmungsseite (35A) aufweist, welche einströmendem Abgas zugewandt ist,
- **dass** jede der Dichtleisten (25, 26, 35, 36) eine Rückseite (35B) aufweist, welche der Anströmungsseite (35A) gegenüberliegt und bei einer Drehwinkelstellung des zugehörigen Drehkolbens (20, 30), bei welcher diese Dichtleiste (25, 26, 35, 36) die Gehäuseinnenwand (12) kontaktiert, nicht einströmenden Abgasen zugewandt ist,
- **dass** die Anströmungsseite (35A) eine konkave Form hat und/oder die Rückseite (35B) konvex geformt ist.

## Claims

1. Exhaust gas energy recovery system comprising
- an exhaust line system (111) for guiding exhaust gases from a combustion engine,
- a motor/generator unit (101) configured to be driven by exhaust energy to generate electrical energy,
- a first line arm (124) to the motor/generator unit (101) for guiding exhaust gases to the motor/generator unit (101),
- the motor/generator unit (101) comprises a motor (100) which is arranged to be driven by a pressure of passing exhaust gases,
**characterized in that**
- the motor (100) is a rotary engine comprising
- a housing (10) defining an inner room (11),
- at least two rotary pistons (20, 30) arranged in the inner room (11),
- an inlet opening (13) which is connected with the exhaust line system (111) for introducing the exhaust gases into the inner room (11), and
- an outlet opening (15) for the exhaust gas defined at the inner room (11) at a side opposite to the inlet opening (13),
- each rotary piston (20, 30) comprises at least two sealing strips (25, 26, 35, 36) and at least two recesses (27, 28, 37, 38) at its outer circumference, the shapes of the recesses (27, 28, 37, 38) and the sealing strips (25, 26, 35, 36) are chosen for sealing engagement of the sealing strips (25, 26, 35, 36) of each one of the rotary pistons (20, 30) with the recesses (27, 28, 37, 38) of the respective other rotary piston (20, 30),
- the sealing strips (25, 26, 35, 36) are sized to sealingly contact a housing inner surface (12) in a radial direction,
- the sealing strips (25, 26, 35, 36) comprise a deformable material such that the sealing strips (25, 26, 35, 36) can be pressed against the housing inner surface (12) by incoming exhaust gases,
- wherein each of the sealing strips (25, 26, 35, 36) comprises an exhaust gas contact surface (35A) facing inflowing exhaust gas when the respective rotary piston (20, 30) is at a rotation angle position at which said sealing strip (25, 26, 35, 36) contacts the housing inner surface (12),
- each of the sealing strips (25, 26, 35, 36) has a rear side (35B) which is opposite the exhaust gas contact surface (35A) and which does not face inflowing exhaust gas when the respective rotary piston (20, 30) is at a rotation angle position in which said sealing strip (25, 26, 35, 36) contacts the housing inner surface (12),
- the exhaust gas contact surface (35A) has a concave shape and/or the rear side (35B) has a convex shape.

2. Exhaust gas energy recovery system as defined in claim 1,
**characterized in that**
a combustion engine and an exhaust gas treatment system (130) for cleaning exhaust gases are provided,
the exhaust line system (111) is configured for guiding at least a part of the exhaust gases of the combustion engine first through the motor (100) of the motor/generator unit (101) and then to the exhaust gas treatment system (130).

3. Exhaust gas energy recovery system as defined in claim 1 or 2,
**characterized in that**
the exhaust line system (111) comprises a fork from which a first line arm (124) runs via the motor (100) in the direction of the exhaust gas treatment system (130), and a second line arm (122) bypasses the motor (100) and runs in the direction of the exhaust gas treatment system (130), and
a control device (120) is provided at the fork and configured to set proportions in which the exhaust gas in divided to the first and second line arms (122, 124).

4. Exhaust gas energy recovery system as defined in any one of the claims 1 to 3, **characterized in that**
the control device (120) comprises a rotatable shutter (120), wherein a rotation position of the rotatable shutter (120) determines in which parts the exhaust gas in guided into the first line arm and the second line arm.

5. Exhaust gas energy recovery system as defined in any one of the claims 1 to 4, **characterized in that**
the rotary pistons (20, 30) comprise at their respective outer circumference slots for receiving and securing the sealing strips (25, 26, 35, 36) and
the sealing strips (25, 26, 35, 36) are formed as slot nuts for securely coupling with the slots of the respective rotary piston (20, 30).

6. Exhaust gas energy recovery system as defined in claim 5,
**characterized in that**
the slots are formed as T-slots and each slot nut comprises a laterally protruding shroud (35C) for engaging with one of the T-slots.

7. Exhaust gas energy recovery system as defined in any one of the claims 1 to 6, **characterized in that**
each rotary piston (20, 30) comprises exactly two sealing strips (25, 26, 35, 36) at opposite angle positions at its outer circumference, and
each rotary piston (20, 30) comprises exactly two recesses (27, 28, 37, 38) arranged at the outer circumference at angle positions which are each offset by 90° relative to the angle positions of the two sealing strips (25, 26, 35, 36).

8. Exhaust gas energy recovery system as defined in any one of the claims 1 to 7, **characterized in that**
each rotary piston (20, 30) comprises a gear rim (23, 33) at its outer circumference, and
the rotary pistons (20, 30) are arranged such that their gear rims (23, 33) mesh.

9. Exhaust gas energy recovery system as defined in any one of the claims 1 to 8, **characterized in that**
the sealing strips (25, 26, 35, 36) protrude from their respective rotary piston (20, 30) further outwards in a radial direction than the respective gear rim (23, 33).

10. Method for exhaust gas energy recovery, comprising
- generating electrical energy from exhaust energy with a motor/generator unit (101),
- guiding exhaust gases to the motor/generator unit (101) via a first line arm (124) of the exhaust line system (111),
- wherein the motor/generator unit (101) comprises a motor (100) which is driven by a pressure of passing exhaust gases,
**characterized by**
- the motor (100) is a rotary engine comprising
- a housing (10) defining an inner room (11),
- at least two rotary pistons (20, 30) arranged in the inner room (11),
- an inlet opening (13) through which exhaust gases are transported from the exhaust line system (111) into the inner room (11), and
- an outlet opening (15) for the exhaust gas defined at the inner room (11) at a side opposite to the inlet opening (13),
- each rotary piston (20, 30) comprises at least two sealing strips (25, 26, 35, 36) and at least two recesses (27, 28, 37, 38) at its outer circumference, the shapes of the recesses (27, 28, 37, 38) and the sealing strips (25, 26, 35, 36) are chosen for sealing engagement of the sealing strips (25, 26, 35, 36) of each one of the rotary pistons (20, 30) with the recesses (27, 28, 37, 38) of the respective other rotary piston (20, 30),
- the sealing strips (25, 26, 35, 36) sealingly contact a housing inner surface (12) in a radial direction,
- the sealing strips (25, 26, 35, 36) comprise a deformable material such that the sealing strips (25, 26, 35, 36) are pressed against the housing inner surface (12) by incoming exhaust gases,
- wherein each of the sealing strips (25, 26, 35, 36) comprises an exhaust gas contact surface (35A) facing inflowing exhaust gas when the respective rotary piston (20, 30) is at a rotation angle position at which said sealing strip (25, 26, 35, 36) contacts the housing inner surface (12),
- each of the sealing strips (25, 26, 35, 36) has a rear side (35B) which is opposite the exhaust gas contact surface (35A) and which does not face inflowing exhaust gas when the respective rotary piston (20, 30) is at a rotation angle position in which said sealing strip (25, 26, 35, 36) contacts the housing inner surface (12),
- the exhaust gas contact surface (35A) has a concave shape and/or the rear side (35B) has a convex shape.

## Revendications

1. Système de récupération de l'énergie de gaz d'échappement comprenant
- un système de conduites de gaz d'échappement (111) pour guider les gaz d'échappement d'un moteur à combustion,
- un dispositif moteur-générateur (101) configuré pour être entraîné par l'énergie des gaz d'échappement pour générer du courant électrique,
- un premier bras de conduite (124) vers le dispositif moteur-générateur (101) pour guider les gaz d'échappement vers le dispositif moteur-générateur (101),
- tandis que le dispositif moteur-générateur (101) comprend un moteur (100) configuré pour être entraîné par une pression des gaz d'échappement le traversant,
**caractérisé en ce que**
- le moteur (100) est un moteur à pistons rotatifs comprenant
- un boîtier (10) formant une chambre interne (11),
- au moins deux pistons rotatifs (20, 30) disposés dans la chambre interne (11),
- une ouverture d'entrée (13) qui est reliée au système de conduites de gaz d'échappement (111) pour introduire les gaz d'échappement dans la chambre interne (11), et
- une ouverture de sortie (15) pour les gaz d'échappement se trouvant dans la chambre interne (11) sur un côté opposé à l'ouverture d'entrée (13),
- chacun des deux pistons rotatifs (20, 30) comprend, sur sa circonférence externe, au moins deux baguettes d'étanchéité (25, 26, 35, 36) et au moins deux renfoncements (27, 28, 37, 38), les formes des renfoncements (27, 28, 37, 38) et les baguettes d'étanchéité (25, 26, 35, 36) étant choisies pour que les baguettes d'étanchéité (25, 26, 35, 36) de chacun des pistons rotatifs (20, 30) s'enfoncent dans les renfoncements (27, 28, 37, 38) du piston rotatif respectif (20, 30),
- les baguettes d'étanchéité (25, 26, 35, 36) sont dimensionnées pour être en contact étanche avec la surface interne d'un boîtier (12) dans une direction radiale,
- les baguettes d'étanchéité (25, 26, 35, 36) comprennent un matériau déformable de sorte qu'elles soient pressées de manière étanche contre la surface interne du boîtier (12) par les gaz d'échappement circulant,
- chacune des baguettes d'étanchéité (25, 26, 35, 36) présente une face de contact avec le gaz d'échappement (35A) orientée vers le gaz d'échappement entrant, lorsque le piston rotatif correspondant (20, 30) est à une position d'angle de rotation à laquelle cette baguette d'étanchéité (25, 26, 35, 36) est en contact avec la surface interne du boîtier (12),
- chacune des baguettes d'étanchéité (25, 26, 35, 36) présente une face arrière (35B) située à l'opposé de la face de contact avec le gaz d'échappement (35A) et qui n'est pas orientée vers le au gaz entrant, lorsque le piston rotatif correspondant (20, 30) est à une position d'angle de rotation à laquelle cette baguette d'étanchéité (25, 26, 35, 36) est en contact avec la surface interne du boîtier (12),
- la face de contact du gaz d'échappement (35A) a une forme concave et/ou la face arrière (35B) a une forme convexe.

2. Un système de récupération de l'énergie de gaz d'échappement tel que défini à la revendication 1,
**caractérisé en ce que**
un moteur à combustion et un système de traitement de gaz d'échappement (130) sont prévus pour nettoyer des gaz d'échappement,
le système de conduites de gaz d'échappement (111) est configuré pour guider au moins une partie des gaz d'échappement du moteur à combustion d'abord à travers le moteur (100) du dispositif moteur-générateur (101) puis vers le système de traitement de gaz d'échappement (130).

3. Système de récupération de l'énergie de gaz d'échappement tel que défini aux revendications 1 ou 2
**caractérisé en ce que**
le système de conduites de gaz d'échappement (111) comprend une bifurcation à partir de laquelle le premier bras de conduite (124) va, via le moteur (100), en direction du système de traitement de gaz d'échappement (130) et un deuxième bras de conduite (122) contourne le moteur (100) et va en direction du système de traitement de gaz d'échappement (130), et
des moyens de contrôle (120) existent à la bifurcation et sont configurés pour régler les proportions dans lesquelles le gaz d'échappement est divisé entre le premier et le deuxième bras de conduite (122, 124).

4. Le système de récupération de l'énergie de gaz d'échappement tel que défini dans l'une des revendications 1 à 3
**caractérisé en ce que**
les moyens de contrôle (120) comprennent un obturateur rotatif (120) dans la position de rotation détermine dans quelles proportions le gaz d'échappement est guidé vers le premier et le deuxième bras de conduite.

5. Le système de récupération de l'énergie de gaz d'échappement tel que défini dans l'une des revendications 1 à 4,
**caractérisé en ce que**
les pistons rotatifs (20, 30) comprennent, sur leur circonférence externe respective, des fentes pour recevoir et fixer les baguettes d'étanchéité (25, 26, 35, 36) et
les baguettes d'étanchéité (25, 26, 35, 36) sont formées en tant que coulisseaux pour entrer fermement dans les fentes du piston rotatif respectif (20, 30).

6. Système de récupération d'énergie de gaz d'échappement tel que défini à la revendication 5,
**caractérisé en ce que**
les fentes sont des fentes en forme de T et chacun des coulisseaux comprend un collier latéralement saillant (35C) pour la pénétration dans l'une des fentes en T.

7. Système de récupération d'énergie de gaz d'échappement tel que défini dans l'une des revendications 1 à 6,
**caractérisé en ce que**
chaque piston rotatif (20, 30) comprend exactement deux baguettes d'étanchéité (25, 26, 35, 36) à des positions d'angle opposées sur sa circonférence externe, et chaque piston rotatif (20, 30) comprend exactement deux renfoncements (27, 28, 37, 38) situés sur la circonférence externe à des positions d'angle qui sont chacune compensées par 90° relativement aux positions d'angle des deux baguettes d'étanchéité (25, 26, 35, 36).

8. Système de récupération de l'énergie de gaz d'échappement tel que défini dans l'une des revendications 1 à 7,
**caractérisé en ce que**
chaque piston rotatif (20, 30) comprend une couronne dentée (23, 33) sur sa circonférence externe, et
les pistons rotatifs (20, 30) sont disposés de sorte que leurs couronnes dentées (23, 33) s'imbriquent.

9. Système de récupération d'énergie de gaz d'échappement tel que défini dans l'une des revendications 1 à 8,
**caractérisé en ce que**
les baguettes d'étanchéité (25, 26, 35, 36) dépassent, dans une direction radiale, de leur piston rotatif respectif (20, 30) plus vers l'extérieur que chaque couronne dentée respective (23, 33).

10. Procédé pour la récupération d'énergie de gaz d'échappement incluant
- la création de courant électrique par le biais d'énergie de gaz d'échappement avec un dispositif moteur-générateur (101),
- tandis que des gaz d'échappement sont conduits dans le dispositif moteur-générateur (101) via un premier bras de conduite (124) d'un système de conduites de gaz d'échappement (111),
- tandis que le dispositif moteur-générateur (101) comprend un moteur (100) qui est entraîné par une pression des gaz d'échappement le traversant,
**caractérisé en ce que**
- le moteur (100) est un moteur à pistons rotatifs comprenant
- un boîtier (10) formant une chambre interne (11),
- au moins deux pistons rotatifs (20, 30) disposés dans la chambre interne (11),
- une ouverture d'entrée (13) par laquelle le gaz d'échappement est transporté du système de conduites de gaz d'échappement (111) vers la chambre interne (11), et
- une ouverture de sortie (15), se trouvant dans la chambre interne (11) sur un côté opposé à l'ouverture d'entrée (13), par laquelle le gaz d'échappement est conduit vers l'extérieur,
- chaque piston rotatif (20, 30) comprend au moins deux baguettes d'étanchéité (25, 26, 35, 36) et au moins deux renfoncements (27, 28, 37, 38) sur sa circonférence externe, les formes des renfoncements (27, 28, 37, 38) et des baguettes d'étanchéité (25, 26, 35, 36) étant choisies pour que les baguettes d'étanchéité (25, 26, 35, 36) de chacun des pistons rotatifs (20, 30) pénètrent dans les renfoncements (27, 28, 37, 38) de chaque autre piston respectif (20, 30),
- les baguettes d'étanchéité (25, 26, 35, 36) sont en contact étanche avec une surface interne du boîtier (12) dans une direction radiale,
- les baguettes d'étanchéité (25, 26, 35, 36) comprennent un matériau déformable de sorte qu'elles soient pressées de manière étanche contre la surface interne du boîtier (12) par les gaz d'échappement circulant,
- chacune des baguettes d'étanchéité (25, 26, 35, 36) présente une face de contact avec le gaz d'échappement (35A) orientée vers le gaz d'échappement entrant, lorsque le piston rotatif correspondant (20, 30) est à une position d'angle de rotation à laquelle cette baguette d'étanchéité (25, 26, 35, 36) est en contact avec la surface interne du boîtier (12),
- chacune des baguettes d'étanchéité (25, 26, 35, 36) présente une face arrière (35B) située à l'opposé de la face de contact avec le gaz d'échappement (35A) et qui n'est pas orientée vers le gaz entrant, lorsque le piston rotatif correspondant (20, 30) est à une position d'angle de rotation à laquelle cette baguette d'étanchéité (25, 26, 35, 36) est en contact avec la surface interne du boîtier (12),
- la face de contact avec le gaz d'échappement (35A) a une forme concave et/ou la face arrière (35B) a une forme convexe.
